# EUROPEAN PATENT APPLICATION

(11) **EP 1 643 793 A1**
(43) Date of publication of application: **05.04.2006**
(21) Application number: 05255906.9
(22) Date of filing: 22.09.2005
(51) Int. Cl.: H04Q 7/38, H04L 12/28

(54) **Transfer of a service session with a mobile from a first wireless local area network to one of its neighbours**

(30) Priority: 30.09.2004 US 954740
(71) Applicant: LUCENT TECHNOLOGIES INC., Murray Hill, New Jersey 07974-0636 (US)
(72) Inventor: Zivkovic, Miroslav, 7511 MK Enschede (NL)
(74) Representative: Sarup, David Alexander

(57) **Abstract**

A method is provided of transfer of a service session with a mobile terminal from a first wireless local area network to one of its neighbours in a telecommunications system. According to,the method, temporary credentials are provided to the mobile terminal, each being usable for access to a corresponding neighbour. The mobile terminal stores said credentials. The mobile terminal moves to the coverage area of a second network which is one of the neighbours, and detects that it has so moved. The mobile terminal identifies, or is informed of the identity of the second network. The mobile terminal then sends to the second network the temporary credential corresponding to the second network. The second network determines the temporary credential received to be valid, so permits service session transfer.

## Description

### Field of the Invention

The present invention relates to telecommunications, in particular to wireless telecommunications.

### Description of the Related Art

There is considerable research interest in problems involved in seamless roaming of a mobile terminal between wireless local area networks (WLANs) that are, interworking with, in other words, connected to, third generation wireless networks. Third generation wireless networks are code division multiple access (CDMA) networks such as CDMA2000 as specified in the Third Generation Partnership Project 2 (3GPP2), and Universal Mobile Telecommunications System (UMTS) as specified in the Third Generation Partnership Project 3GPP.

One of the main issues is that as a mobile user terminal moves into the coverage area of a second WLAN from a first, the mobile user terminal must identify itself and be authenticated in respect of the second WLAN for the service session to continue, in other words for the service session to be transferred successfully to the second WLAN. Otherwise the service session is dropped. In other words, a service session is torn down.

The service session can be of a voice, video , or data service or any combination thereof, for example, a voice call or video stream.

Transfer of service sessions between networks, such as WLANs, is sometimes known as handover.

In the prior art approach, a mobile terminal is only authenticated in respect of a WLAN upon entry to the coverage area of that WLAN. The authentication procedure involves communications back to a third generation network where the authentication is undertaken on behalf of the WLAN.

### Summary of the Invention

The inventor realised that while in a coverage area of a particular WLAN, a mobile terminal may be authenticated in respect of neighbouring WLANs also, and can be supplied with temporary credentials corresponding to those WLANs. Then should the mobile terminal move into the coverage area of one of the neighbouring wireless local area networks (WLANs), the appropriate credential can be checked locally.

Accordingly, an example of the present invention is a method of transfer of a service session with a mobile terminal from a first wireless local area network to one of its neighbouring wireless local area networks in a telecommunications system. According to the method, temporary credentials are provided to the mobile terminal, each being usable for access to a corresponding neighbour. The mobile terminal stores said credentials. The mobile terminal moves to the coverage area of a second network which is one of the neighbours, and detects that it has so moved. The mobile terminal identifies, or is informed of the identity of, the second network. The mobile terminal then sends to the second network the temporary credential corresponding to the second network. The second network determines the temporary credential received to be valid, so permits service session transfer.

The identity of the mobile terminal can be first checked and found valid for the temporary credentials to be provided to the mobile terminal.

Embodiments of the invention can have advantages in performance over the prior art approach. For example, one such advantage is that there is less likelihood of a service session being dropped upon moving into the coverage area of a neighbouring WLAN as authentication is largely undertaken in advance.

In examples of the present invention, after transfer to a new network the process of being provided with such temporary credentials for the new set of neighbours is repeated. Although this process can take time, it occurs as a background process whilst the service session is on-going, so normally will not interrupt the service session in consequence.

The present invention can also provide an access point of a wireless local area network, the access point comprising a processor configured to: receive from a mobile terminal which has moved into the coverage area of the network a temporary credential; check that said received temporary credential is valid: authorise transfer of a call connection with the mobile terminal to the network in consequence. Preferably, the processor or access point is configured to beforehand provide the temporary credential for supply to the mobile terminal for use in the event that the mobile terminal moves into the coverage area of the network. Preferably, the processor or access point is configured to communicate with a third generation network which authenticates the mobile terminal when the mobile terminal is not in the coverage area of the network, and is configured to receive from the third generation network an indication that the mobile terminal is authenticated and so the temporary credential can be provided.

### Brief Description of the Drawings

An embodiment of the present invention will now be described by way of example and with reference to the drawings, in which:
Figure 1 is a diagram illustrating a known telecommunications system (PRIOR ART),
Figure 2 is a diagram illustrating a known authentication procedure used in the system shown in Figure 1 (PRIOR ART),
Figure 3 is a diagram illustrating a telecommunications system according to an example embodiment of the present invention, and
Figure 4 is a diagram illustrating an authentication procedure used in the system shown in Figure 3.

The drawings are not to scale but are schematic representations.

### Detailed Description

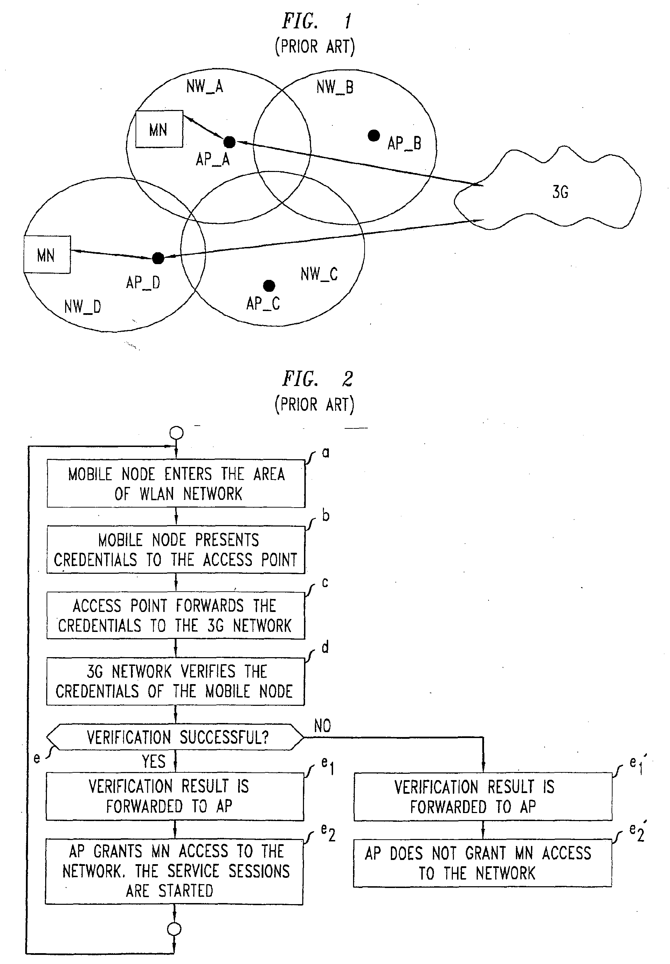

Figure 1 shows a known telecommunications system consisting of wireless local area networks (WLANs), four of which are shown denoted NW_A, NW_B, NW_C, and NW_D respectively. Each WLAN is connected to a third generation network denoted 3G. As is known, a base transmitter-receiver of a WLAN is often referred to as an access point (often abbreviated to AP). The WLAN can be connected, for example by connection between the access point and a Gateway GPRS Support Node (GGSN, to use third generation terminology, not shown) of the third generation network 3G, or by an Internet connection directly between the WLAN and core network (not shown) of the third generation network 3G.. In such known systems, the authentication is made at the third generation network 3G; the access point merely acting to forward authentication messages between a mobile user terminal (Mobile Node, MN) and the third generation network 3G. Of course, there are agreements (service level agreements) between the WLANs and third generation networks enabling this.

The known authentication procedure is as shown in Figure 2, with reference to Figure 1 also. The procedure is as follows, the steps being labelled as shown in Figure2:
(a) The mobile terminal MN enters the coverage area of the new WLAN network, for example NW_A.
(b) In order to gain access to the WLAN network, the mobile terminal MN sends authentication credentials, specifically its identity in appropriately encoded format, to the access point AP_A.
(c) The access point AP_A forwards the credentials to the third generation network 3G.
(d) The third generation network 3G verifies the credentials of, in other words authenticates, the mobile terminal.
(e) On the one hand, if the authentication is successful, then (e1) the third generation network sends a positive authentication message to the access point AP_A in reply; and (e2) the access point AP_A grants access to the mobile terminal MN; On the other hand, if the authentication is unsuccessful, then (e1') the third generation network sends an authentication-refusal message to the access point AP_A in reply, and (e2') the access point AP_A does not grant access to the mobile terminal MN.

When the mobile terminal MN moves to another wireless local area network (WLAN), e.g. NW_B, this sequence of steps is repeated. As this sequence of steps only occurs upon the mobile terminal entering the new WLAN, and authentication is undertaken at the third generation network so this procedure can take a long time, sometimes so long that the service session is dropped.

We turn now to describe an example embodiment according to the present invention.

### Example System

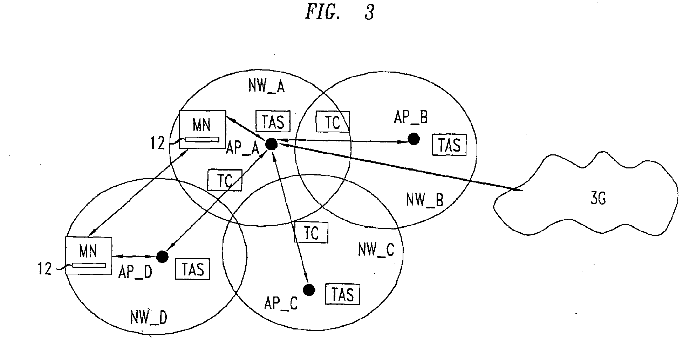

As shown in Figure 3, the telecommunications system consists of WLANs, four of which are shown, denoted NW_A, NW_B, NW_C, and NW_D respectively. Each WLAN is connected to a third generation network 3G. The third generation network 3G is the originating network or home network of the mobile terminal, which means that the main authentication of the mobile terminal is undertaken by the third generation network 3G. Of course, there are agreements (service level agreements) between the WLANs and the third generation network 3G enabling them to do this on behalf of the WLANs. A base transmitter-receiver of a WLAN is referred to as an access point (AP). Each wireless local area network (WLAN) is connected to the third generation network, for example by radio connection between the access point and a Gateway GPRS Support Node (GGSN, not specifically shown) of the third generation network 3G, or by an Internet connection directly between the WLAN and core network (not specifically shown) of the third generation network 3G.

As shown in Figure 3, each WLAN has an access point which includes a processor, referred to as a Temporary Authentication Server (TAS) or in other words a temporary credential server, within the access point. The Temporary Authentication Server (TAS) is configured to issue temporary credentials and verify those temporary credentials it receives from mobile terminals. Temporary credentials are codes enabling service session access to the WLAN for a limited time, for example certification codes, pass codes etc.

Each mobile terminal (mobile node, MN) includes a memory 12 (such as a Random Access Memory, or other storage device, e.g. a hard disk) in which to store temporary credentials issued to it by various Temporary Authentication Servers (TAS). Each mobile terminal MN includes a processor programmed to monitor the currency of the temporary credentials that it stores, to determine whether the time limit associated with each temporary credential has expired or not.

### Authentication Procedure

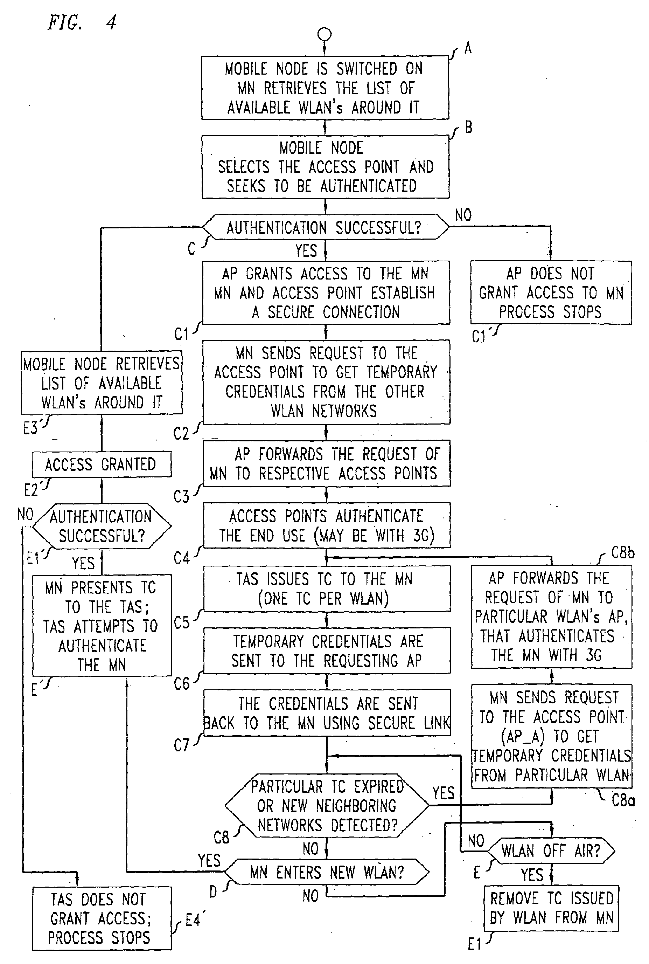

The authentication procedure is as shown in Figure 4, with reference to Figure 3 also. The procedure is as follows, the steps being labelled as shown in Figure3:
(A) The mobile terminal MN is switched on, and obtains information of the WLANs around it (NW_A, NW_B, NW_C, and NW_D), by receiving beacon signals from the WLANs.
(B) The mobile terminal determines which WLAN to connect to according to predetermined criteria known to the mobile terminal, for example which WLAN provides the best received signal strength to the mobile terminal. The mobile terminal selects e.g. AP_A of the WLAN network e.g. NW_A, in the coverage area of which the mobile terminal MN is located. The mobile terminal then seeks to authenticate to the selected network by sending a credential, namely a mobile terminal MN identifier, to the access point which is forwarded to the third generation network 3G, where a check is made whether or not the credential is acceptable. In other words, the credential is verified by the third generation network 3G on behalf of the particular wireless local area network (WLAN) associated to (NW_A in this example) so as to authenticate the mobile terminal MN to the WLAN.
(C) On the one hand, if the mobile terminal is successfully authenticated by the third generation network 3G then:
(C1) The access point, e.g. AP_A, of the network in which the mobile terminal (mobile node, MN) is located, e.g. NW_A, grants access to the mobile terminal MN such that a secure, in other words, encrypted, connection between the mobile terminal MN and the access point (e.g. AP_A) is made. Accordingly, data is transmitted; in other words, service is provided.
(C2) The mobile terminal MN sends a request, over the connection to the access point of the current network, e.g. AP_A, to be given temporary credentials in respect of each of the neighbouring WLANs, in case the coverage area of one of these neighbouring WLANs is entered by the mobile terminal MN. In an example, the neighbouring WLANs are NW_B, NW_C, and NW_D, shown in Figure 3.
(C3) The access point of the current network, AP_ A in this first example, forwards this request for temporary credentials to each of the access points of the neighbouring networks.
(C4) The access points of the neighbouring networks, each have the third generation network 3G authenticate the mobile terminal MN. This authentication is, for example, by the mobile terminal MN sending a credential, namely a mobile terminal MN identifier, to each of the respective access points AP_B, AP_C, AP_D of the neighbouring networks. Each credential is then forwarded to the third generation network 3G, where a check is made whether or not the credential is acceptable. In other words, the credentials are verified by the third generation network 3G on behalf of each of the particular WLANs (NW_B, NW_C, and NW_D in this example).
(C5) Each of the access points of the neighbouring networks to which the mobile terminal MN is successfully authenticated issues a temporary credential to be used by the mobile terminal MN upon entry to the coverage area of the corresponding network. Each of the neighbouring networks, e.g. NW_B, NW_C, and NW_D provides a corresponding temporary credential. A temporary credential can be considered as an access code. It is the Temporary Authentication Servers (TASs) within the access points of the neighbouring WLAN networks which issue the temporary credentials.
(C6) The temporary credentials issued in the step above are each are sent to the access point of the current network, e.g. AP_A.
(C7) The access point of the current network, e.g. AP_A, forwards these temporary credentials in a reply to the mobile terminal MN over the secure connection. The temporary credentials are stored in the memory 12 of the mobile terminal MN. Each temporary credential includes not only a code enabling access to the corresponding network NW_B, NW_C, NW_D but also an indication of to which of the networks NW_B, NW_C, NW_D it is to be used to gain access to. Each temporary credential also includes a time of expiry.

The temporary credentials are stored in the memory 12 for use should the mobile terminal MN move to the coverage area of a neighbouring WLAN network (NW_B, NW_C, NW_D)

(C8) A check is made whether a temporary credential for any of the neighbouring networks has expired or a new neighbouring network is detected (for example having just come "on-air", in other words been switched on). If yes, that temporary credential is updated, by the mobile terminal MN requesting (C8a) a replacement temporary credential from the access point of the current network e.g. AP_A. This request indicates the particular WLAN in respect of which a fresh temporary credential is required. The request is forwarded (C8b) by access point of the current network, e.g. AP_A, to the access point of the network concerned, for example AP_B where the expired temporary credential is for network NW_B. The process then returns to step (C5), a replacement set of temporary credentials being issued.

On the other hand, if the mobile terminal is not successfully authenticated by the third generation network 3G at step (C) above, then:
(C1') The access point of the current network, e.g. AP_ A, does not grant access to the mobile terminal MN, and so the process stops.
   (D) As shown in Figure 4 , if is found that none of the latest set of stored temporary credentials has expired then a check is made whether the mobile terminal (mobile node, MN) has entered the coverage area of another wireless local area network (WLAN) e.g. NW_B, NW_C, or NW_D. The mobile terminal MN can identify and inform of this from, for example, the relative received signal strengths of beacon signals from various of the WLANs.
   If no, then:
(E) A check is made whether any of the neighbouring WLANs has gone off-air, in other words, not being available for use any more. If no, a return is made to step (C8). If yes, the temporary credential for that WLAN is removed (step E1) from the memory 12 of the mobile terminal MN, then a return is made to step (C8).

If at step (D) the answer to the question whether the mobile terminal MN has entered a coverage area of another WLAN is yes, then:
(E') The mobile terminal MN selects the appropriate temporary credential from its memory 12 and sends this to the access point of the network it has now entered, e.g. AP_B if the network entered is NW_B. The Temporary Authentication Server (TAS) within this access point checks to see that the temporary credential it receives is the correct one, in other words seeks to authenticate the mobile terminal MN. If yes (E1') the mobile terminal MN thereby is granted access (E2') to the access point of the new network, e.g. by access point AP _B to WLAN Network NW _B.
(E3') The mobile terminal MN then obtains fresh information as to which are its current the WLANs around it, in other words which are now its neighbours, by receiving beacon signals from the WLANs.

There is then a return to step (C) described above so as to update the temporary credentials in the mobile terminal MN accordingly.

On the other hand, if the TAS does not recognise the temporary credential provided as being correct access is not granted and the process stops (E4').

### Another example

In another otherwise similar embodiment, the mobile terminal only requests and stores temporary credentials for those of the neighbouring WLAN networks in the direction of movement of the mobile terminal, rather than temporary credentials of neighbouring WLAN networks all around.

### General

The service session can be of a voice, video , or data service or any combination thereof, for example, a voice call or video stream.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of transfer of a service session with a mobile terminal from a first wireless local area network to one of its neighbouring wireless local area networks in a telecommunications system by:
providing temporary credentials to the mobile terminal, each being usable for access to a corresponding neighbouring wireless local area network;
the mobile terminal storing said credentials;
the mobile terminal moving to the coverage area of a second network which is one of the neighbouring wireless local area networks;
the mobile terminal detecting that it has so moved;
the mobile terminal identifying, or being informed of the identity of, the second network;
the mobile terminal sending to the second network the temporary credential corresponding to the second network; and
the second network determining the temporary credential received to be valid so permitting service session transfer.

2. A method according to claim 1, further comprising:
checking the identity of the mobile terminal; and
identifying the mobile terminal as valid;
whereupon said providing temporary credentials is undertaken.

3. A method according to claim 2, in which the wireless local area networks are connected to a third generation network,
said checking of the identity of the mobile being undertaken by the third generation network.

4. A method according to claim 1, in which upon said second network determining the temporary credential to be valid, the mobile terminal identifies the current neighbouring wireless local area networks and then corresponding temporary credentials are sent to the mobile terminal;
the mobile terminal stores said credentials, each being usable for access to a corresponding neighbouring wireless local area network to the second wireless local area network.

5. A method according to claim 1, in which only those networks adjacent to the first network and lying in the direction of travel of the mobile terminal are considered its neighbouring networks.

6. A method according to claim 1, in which the temporary credentials expire and are updated upon expiry.

7. A method according to claim 1, in which each temporary credential includes an identifier of the corresponding network.

8. A method according to claim 1, in which each temporary credential is an access code unique to the corresponding network at the time.

9. A method of transfer of a service session with a mobile terminal from one wireless local area network to one of its neighbouring wireless local area networks in a telecommunications system by :
providing temporary credentials to the mobile terminal, each credential being usable for access to a corresponding neighbouring wireless local area network to the first wireless local area network;
a second network which is one of the neighbouring networks receiving from the mobile terminal which has moved to the coverage area of the second network a temporary credential corresponding to the second network;
the second network determining the temporary credential received to be valid so permitting service session transfer to the second network.

10. A method of transfer of a service session to a mobile terminal from one wireless local area network to one of its neighbouring wireless local area networks in a telecommunications system by the mobile terminal:
receiving temporary credentials, each being usable for access to a corresponding neighbouring wireless local area network to the first wireless local area network;
storing said credentials;
moving to the coverage area of a second network which is one of the neighbouring wireless local area networks;
detecting that it has so moved;
identifying, or being informed of the identity of, the second network;
selecting and sending the corresponding temporary credential to the second network; and
receiving an indication that the second network determined the temporary credential received to be valid and so permits service session transfer.
